(19) Europäisches Patentamt
European Patent Office
Office européen des brevets

(11) EP 4 807 795 A1

(12) EUROPEAN PATENT APPLICATION
published in accordance with Art. 153(4) EPC

(43) Date of publication:
**16.09.2026 Bulletin 2026/38**

(21) Application number: **23957935.2**

(22) Date of filing: **08.11.2023**

(51) International Patent Classification (IPC):
***H01M 4/13*** $^{(2010.01)}$ ***H01M 4/133*** $^{(2010.01)}$
***H01M 4/134*** $^{(2010.01)}$

(52) Cooperative Patent Classification (CPC):
**H01M 4/13; H01M 4/133; H01M 4/134;** Y02E 60/10

(86) International application number:
**PCT/CN2023/130417**

(87) International publication number:
**WO 2025/097326 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited**
**Ningde, Fujian 352100 (CN)**

(72) Inventor: **HE, Jun**
**Ningde, Fujian 352100 (CN)**

(74) Representative: **Kraus & Lederer PartGmbB**
**Thomas-Wimmer-Ring 15**
**80539 München (DE)**

# (54) SECONDARY BATTERY AND ELECTRIC DEVICE

(57) This application provides a secondary battery and an electric device. The secondary battery includes an electrode assembly and an electrolyte. The electrode assembly includes a positive electrode plate, a negative electrode plate, and a separator, where the positive electrode plate includes a positive electrode active material layer, the positive electrode active material layer including a positive electrode active material; and the negative electrode plate includes a negative electrode active material layer, the negative electrode active material layer including a negative electrode active material; a coating weight of the positive electrode active material layer is $W_z$, a coating weight of the negative electrode active material layer is $W_f$, and $W_z$ and $W_f$ satisfy: $1.6W_f \leq W_z \leq 2.2W_f$, and $3.25\ mg/cm^2 \leq W_f \leq 5.84\ mg/cm^2$; and $D_v99$ of the positive electrode active material is 27 μm to 33 μm, and $D_v99$ of the negative electrode active material is 23 μm to 28 μm. The electrolyte includes an organic solvent, a lithium salt, and a nitrile additive, where the organic solvent includes a chain carboxylic acid ester; and based on a mass of the electrolyte, a mass percentage of the chain carboxylic acid ester is 6% to 56%, and a mass percentage of the nitrile additive is 0.01% to 10%. The secondary battery has good cycling kinetic performance and high-temperature stability.

1200
1000
800
600
400
200
0
Raman Intensity (W/m²)
900
1100
1300
1500
1700
1900
Raman Shift (cm⁻¹)

FIG. 1



Processed by Luminess, 75001 PARIS (FR)

## Description

### TECHNICAL FIELD

This application relates to the field of electrochemical technology, and in particular, to a secondary battery and an electric device.

### BACKGROUND

Secondary batteries (such as lithium-ion batteries), with characteristics of high specific energy, high operating voltage, low self-discharge rate, small volume, and light weight, are widely used in various fields such as electric energy storage, portable electronic devices, and electric vehicles. With the continuous iterative development of consumer lithium-ion batteries in recent years, the market demand for their charging speed is getting higher, the charging rate of lithium-ion batteries is continuously increasing, and the consumer demand has gradually increased from 1C to above 5C. However, it is challenging to achieve both high charging rate (5C ≤ charging rate ≤ 15C) and high-temperature (temperature ≥ 60°C) stability for lithium-ion batteries. Therefore, how to balance the high-temperature stability of lithium-ion batteries while improving the cycling kinetic performance of ultra-fast-charging lithium-ion batteries has become an urgent technical problem to be resolved by those skilled in the art.

### SUMMARY

This application aims to provide a secondary battery capable of balancing the high-temperature stability of the secondary battery while improving the cycling kinetic performance of the secondary battery. This application also provides an electric device using such secondary battery.

It should be noted that in the summary of this application, lithium-ion batteries are used as an example of secondary batteries to explain this application, but the secondary batteries in this application are not limited to lithium-ion batteries, and can also be secondary batteries such as sodium-ion batteries. The specific technical solution is as follows:

A first aspect of this application provides a secondary battery. The secondary battery includes an electrode assembly and an electrolyte, where the electrode assembly includes a positive electrode plate, a negative electrode plate, and a separator, where the positive electrode plate includes a positive electrode active material layer, the positive electrode active material layer including a positive electrode active material; the negative electrode plate includes a negative electrode active material layer, the negative electrode active material layer including a negative electrode active material; a coating weight of the positive electrode active material layer is $W_z$, a coating weight of the negative electrode active material layer is $W_f$, and $W_z$ and $W_f$ satisfy: $1.6W_f \leq W_z \leq 2.2W_f$, and $3.25\ mg/cm^2 \leq W_f \leq 5.84\ mg/cm^2$; and $D_v99$ of the positive electrode active material is 27 μm to 33 μm, and $D_v99$ of the negative electrode active material is 23 μm to 28 μm; and the electrolyte includes an organic solvent, a lithium salt, and a nitrile additive, where the organic solvent includes a chain carboxylic acid ester; and based on a mass of the electrolyte, a mass percentage of the chain carboxylic acid ester is 6% to 56%, and a mass percentage of the nitrile additive is 0.01% to 10%. The positive electrode active material layer and the negative electrode active material layer adopt relatively low coating weights, which can reduce the thicknesses of the positive electrode active material layer and the negative electrode active material layer and increase the porosities of the positive electrode active material layer and the negative electrode active material layer. This, in turn, reduces the ohmic polarization and concentration polarization of the electrode plate, and shortens the transmission distance of lithium ions inside the electrode plate, thereby improving the charging rate of the secondary battery. The selection of small-particle positive and negative electrode active materials improves the surface activity of the positive and negative electrode active materials and shortens the transmission distances of lithium ions inside the positive and negative electrode active material particles, thereby reducing the concentration polarization of the secondary battery. Moreover, adding a chain carboxylic acid ester within the concentration range specified in this application to the electrolyte ensures its low viscosity, thereby meeting the requirement for rapid transmission of lithium ions during ultra-fast charging. The above selection of the coating weights for the positive and negative electrode active material layers, particles for the positive and negative electrode active materials, and components for the electrolyte enables the secondary battery to achieve high kinetic performance to meet the needs of ultra-fast charging. However, the high-kinetics design of the secondary battery brings risks to high-temperature stability. The small-particle, high-activity active materials are prone to side reactions with the chain carboxylic acid esters in the electrolyte, especially at high temperatures. The side reactions may cause severe gas production inside the lithium-ion battery, resulting in deterioration of the high-temperature storage performance and hot box performance of the secondary battery. To this end, the nitrile additive within the concentration range specified in this application is added to the electrolyte, so as to protect the positive and negative electrode plates and reduce the side reactions between the electrolyte and the positive and negative electrode plates while maintaining the high kinetic performance of the secondary battery, thereby improving the high-temperature stability of the secondary battery. Thus, by combining the coating weights

of the positive electrode active material layer and the negative electrode active material layer, the $D_v99$ of the positive electrode active material and the negative electrode active material, the electrolyte components and contents, this application achieves a good synergistic effect between the coating weights of the positive electrode active material layer and the negative electrode active material layer, the $D_v99$ of the positive electrode active material and the negative electrode active material, and the electrolyte. This can achieve high-temperature stability for the secondary battery while improving the cycling kinetic performance of the secondary battery.

In one embodiment of this application, 6.49 mg/cm$^2$ $\leq W_z \leq$ 11.69 mg/cm$^2$. In this application, with the coating weight of the positive electrode active material layer controlled within the range of this application, the secondary battery can achieve good cycling kinetic performance while achieving high-temperature stability.

In one embodiment of this application, 3.90 mg/cm$^2$ $\leq W_f \leq$ 5.19 mg/cm$^2$, and/or 7.80 mg/cm$^2$ $\leq W_z \leq$ 10.38 mg/cm$^2$. With $W_z$ and/or $W_f$ controlled within the above ranges, the coating weight range of the positive electrode active material layer and/or the negative electrode active material layer is more optimal. This is beneficial to further improve the cycling kinetic performance of the secondary battery while achieving high-temperature stability.

In one embodiment of this application, the $D_v99$ of the positive electrode active material is 28 μm to 31 μm, and/or the $D_v99$ of the negative electrode active material is 24 μm to 26 μm. With the $D_v99$ of the positive electrode active material and/or the $D_v99$ of the negative electrode active material controlled within the above ranges, the range of the $D_v99$ of the positive electrode active material and/or the $D_v99$ of the negative electrode active material is more optimal. This is beneficial to further improve the cycling kinetic performance and high-temperature stability of the secondary battery.

In one embodiment of this application, $D_v50$ of the positive electrode active material is 10 μm to 15 μm, and $D_v50$ of the negative electrode active material is 7 μm to 12 μm. With the $D_v50$ of the positive electrode active material and the negative electrode active material controlled within the above ranges, the secondary battery can have high energy density while achieving good cycling kinetic performance and high-temperature stability.

In one embodiment of this application, the negative electrode active material includes at least one of a carbon-based material, a silicon-based material, or a tin-based material, where the carbon-based material includes at least one of natural graphite, artificial graphite, soft carbon, hard carbon, or mesocarbon microbeads; the silicon-based material includes at least one of elemental silicon, a silicon-carbon material, or a silicon-oxygen material; and the tin-based material includes at least one of elemental tin, a tin alloy, or a tin oxide. The above types of negative electrode active materials have high surface activity, allowing the secondary battery to have good cycling kinetic performance while achieving high-temperature stability.

In one embodiment of this application, for the carbon-based material, a peak intensity ratio $I_d/I_g$ of a D peak to a G peak obtained from Raman spectroscopy satisfies: $0.1 \leq I_d/I_g \leq 1.0$. Applying the carbon-based material satisfying the above $I_d/I_g$ value to the secondary battery allows the secondary battery to further improve its cycling kinetic performance while achieving good high-temperature stability.

In one embodiment of this application, the positive electrode active material includes at least one of lithium nickel cobalt manganese oxide, lithium nickel cobalt aluminum oxide, lithium iron phosphate, lithium-rich manganese-based material, lithium cobaltate, lithium manganate, lithium manganese iron phosphate, or lithium titanate. The above types of positive electrode active materials have high surface activity, allowing the secondary battery to have good cycling kinetic performance while achieving high-temperature stability.

In one embodiment of this application, the positive electrode active material further includes a non-metal element, where the non-metal element includes at least one of fluorine, phosphorus, boron, chlorine, silicon, or sulfur. With the above types of non-metal elements included in the positive electrode active material, the stability of the positive electrode active material can be further improved. The non-metal element can be added to the positive electrode active material by bulk phase doping or surface coating.

In one embodiment of this application, the chain carboxylic acid ester includes at least one of methyl formate, methyl acetate, ethyl formate, ethyl acetate, propyl acetate, ethyl propionate, methyl propionate, n-propyl propionate, isopropyl propionate, methyl propionate, n-butyl propionate, isobutyl propionate, n-pentyl propionate, isopentyl propionate, ethyl butyrate, n-propyl butyrate, propyl isobutyrate, n-pentyl butyrate, n-pentyl isobutyrate, n-butyl butyrate, isobutyl isobutyrate, or n-pentyl valerate. The above types of chain carboxylic acid esters have high conductivity and low viscosity, facilitating lithium ion transmission. The use of the above types of chain carboxylic acid esters allows the secondary battery to have good cycling kinetic performance and high-temperature stability.

In one embodiment of this application, based on the mass of the electrolyte, a mass percentage of the chain carboxylic acid ester is 18% to 40%. With the mass percentage of the chain carboxylic acid ester controlled within the above range, lithium ions exhibit a faster transmission speed in the electrolyte, thereby further improving the cycling kinetic performance of the secondary battery while achieving good high-temperature stability.

In one embodiment of this application, the nitrile additive includes at least one of malononitrile, succinonitrile, glutaronitrile, adiponitrile, pimelonitrile, suberonitrile, sebaconitrile, 3,3'-oxydipropionitrile, hex-2-enedinitrile, trans-but-2-enedinitrile, 2-pentenedinitrile, methylglutaronitrile, 4-cyanoheptanedinitrile, (Z)-but-2-enedinitrile, 2,2,3,3-tetrafluorosuccinonitrile, ethylene glycol bis(propionitrile) ether, 1,3,5-pentanetricarbonitrile, 1,3,6-hexanetricarbonitrile, 1,2,6-

hexanetricarbonitrile, 1,2,3-tris(2-cyanoethoxy)propane, 1,1,3,3-propanetetracarbonitrile, 2,2'-(1,4-phenylene)bispropanedinitrile, 1,1,5,5-pentanetetracarbonitrile, 1,1,4,4-butanetetracarbonitrile, or 1,1,6,6-hexanetetracarbonitrile. The use of the above types of nitrile additives allows the secondary battery to further improve its high-temperature stability while achieving good cycling kinetic performance.

In one embodiment of this application, based on the mass of the electrolyte, a mass percentage of the nitrile additive is 5% to 8%. With the mass percentage of the nitrile additive controlled within the above range, it is beneficial to further improve the high-temperature stability of the secondary battery while achieving good cycling kinetic performance.

In one embodiment of this application, the organic solvent further includes at least one of ethylene carbonate, propylene carbonate, dimethyl carbonate, diethyl carbonate, methyl ethyl carbonate, $\gamma$-butyrolactone, or tetrahydrofuran; and based on the mass of the electrolyte, a mass percentage of the organic solvent is 60% to 80%. Further selecting the above organic solvents and controlling the mass percentage of the organic solvent within the above range allow the secondary battery to have good cycling kinetic performance and high-temperature stability.

A second aspect of this application provides an electric device including the secondary battery described in any one of the foregoing embodiments. Therefore, the electric device has good use performance.

Beneficial effects of this application:

This application provides a secondary battery and an electric device. In the secondary battery, the coating weight of the negative electrode active material layer, the relationship between the coating weights of the positive electrode active material layer and the negative electrode active material layer, the $D_v99$ of the positive electrode active material and the negative electrode active material, the electrolyte components and contents are controlled within the ranges of this application, so that a good synergistic effect can be achieved between the coating weight of the negative electrode active material layer, the relationship between the coating weights of the positive electrode active material layer and the negative electrode active material layer, the $D_v99$ of the positive electrode active material and the negative electrode active material, the electrolyte components and contents. This results in a short transmission path of lithium ions inside the positive/-negative electrode active materials during the transmission process, as well as a small transmission tortuosity and a short transmission distance inside the positive/negative electrode plates, thereby reducing the concentration polarization and electrochemical polarization of the secondary battery. Furthermore, the positive and negative electrode plates can be protected, and side reactions between the electrolyte and the positive and negative electrode plates can be reduced, thereby achieving the high-temperature stability of the secondary battery while improving the cycling kinetic performance of the secondary battery.

## BRIEF DESCRIPTION OF DRAWINGS

The accompanying drawings described herein are used to provide a further understanding of this application and constitute a part of this application. The schematic embodiments of this application and the description thereof are used to explain this application, but do not constitute any improper limitation on this application.

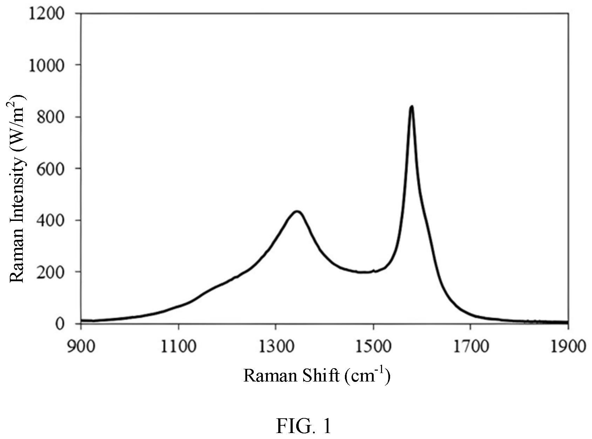

FIG. 1 is a Raman spectrum of a negative electrode of Example 3-3.

## DETAILED DESCRIPTION

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

It should be noted that in the detailed description of this application, lithium-ion batteries are used as an example of secondary batteries to explain this application, but the secondary batteries of this application are not limited to lithium-ion batteries, and can also be secondary batteries such as sodium-ion batteries.

A first aspect of this application provides a secondary battery. The secondary battery includes an electrode assembly and an electrolyte, where the electrode assembly includes a positive electrode plate, a negative electrode plate, and a separator, where the positive electrode plate includes a positive electrode active material layer, the positive electrode active material layer including a positive electrode active material; the negative electrode plate includes a negative electrode active material layer, the negative electrode active material layer including a negative electrode active material; a coating weight of the positive electrode active material layer is $W_z$, a coating weight of the negative electrode active material layer is $W_f$, and $W_z$ and $W_f$ satisfy: $1.6W_f \leq W_z \leq 2.2W_f$, and $3.25\ mg/cm^2 \leq W_f \leq 5.84\ mg/cm^2$; and $D_v99$ of the positive electrode active material is 27 $\mu$m to 33 $\mu$m, and $D_v99$ of the negative electrode active material is 23 $\mu$m to 28 $\mu$m; and the electrolyte includes an organic solvent, a lithium salt, and a nitrile additive, where the organic solvent includes a

chain carboxylic acid ester; and based on a mass of the electrolyte, a mass percentage of the chain carboxylic acid ester is 6% to 56%, and a mass percentage of the nitrile additive is 0.01% to 10%.

For example, $W_f$ is 3.25 mg/cm$^2$, 3.5 mg/cm$^2$, 3.75 mg/cm$^2$, 4 mg/cm$^2$, 4.25 mg/cm$^2$, 4.5 mg/cm$^2$, 4.75 mg/cm$^2$, 5 mg/cm$^2$, 5.25 mg/cm$^2$, 5.5 mg/cm$^2$, 5.84 mg/cm$^2$, or any value in a range defined by any two of the above values. If the coating weight of the positive electrode active material layer is less than 1.6$W_f$, the coating weight of the negative electrode active material layer is too large compared to the coating weight of the positive electrode active material layer. When the potential of the secondary battery is reached, the delithiation speed of the positive electrode increases significantly. This results in an excessively high actual potential of the positive electrode and makes the structure prone to damage, leading to rapid degradation of the positive electrode, and causing the secondary battery unable to cycle normally. If the coating weight of the positive electrode active material layer is greater than 2.2$W_f$, the coating weight of the positive electrode active material layer is too large compared to the coating weight of the negative electrode active material layer, and excessive lithium ions are deintercalated. The negative electrode cannot accept all the lithium ions deintercalated from the positive electrode, and the lithium ions cannot be normally intercalated into the negative electrode plate, causing lithium precipitation on the negative electrode plate and affecting the cycling kinetic performance of the secondary battery. When the coating weight of the negative electrode active material layer is less than 3.25 mg/cm$^2$, the energy density of the secondary battery decreases, and the service life decreases, making it difficult to meet the process requirements of the secondary battery. When the coating weight of the negative electrode active material layer is greater than 5.84 mg/cm$^2$, the transmission distance of lithium ions inside the positive electrode plate and/or the negative electrode plate increases, and the impedance of the secondary battery increases.

For example, the $D_v99$ of the positive electrode active material is 27 μm, 28 μm, 29 μm, 30 μm, 31 μm, 32 μm, 33 μm, or any value in a range defined by any two of the above values. If the $D_v99$ of the positive electrode active material is less than 27 μm, the $D_v99$ of the positive electrode active material is too small, indicating that the volume-based particle size of the positive electrode active material particles is too small, making the positive electrode active material particles prone to agglomeration during the preparation of the positive electrode slurry. As a result, the probability of the positive electrode active material being uniformly dispersed in the positive electrode slurry is extremely low, leading to uneven distribution of the positive electrode active material particles in the formed positive electrode active material layer. This affects the processing stability of the positive electrode plate, and causes uneven coating during application of the positive electrode slurry. Moreover, the specific surface area of the positive electrode active material particles is too large, increasing the contact interface between the positive electrode active material particles and the electrolyte, and intensifying the side reactions. Particularly, under the high-kinetics electrolyte system for ultra-fast charging, the side reactions become excessively intense, accelerating the consumption of electrolyte and the generation of side reaction products, and deteriorating the cycling performance and high-temperature stability of the secondary battery. If the $D_v99$ of the positive electrode active material is greater than 33 μm, the $D_v99$ of the positive electrode active material is too large, resulting in an excessively long transmission path of lithium ions inside the positive electrode active material particles, and excessively large tortuosity during transmission inside the positive electrode plate. This causes excessive concentration polarization inside the secondary battery, increasing the internal resistance of the secondary battery and reducing the cycling kinetic performance of the secondary battery.

For example, the $D_v99$ of the negative electrode active material is 23 μm, 24 μm, 25 μm, 26 μm, 27 μm, 28 μm, or any value in a range defined by any two of the above values. If the $D_v99$ of the negative electrode active material is less than 23 μm, the $D_v99$ of the negative electrode active material is too small, indicating that the volume-based particle size of the negative electrode active material particles is too small, making the negative electrode active material particles prone to agglomeration during the preparation of the negative electrode slurry. As a result, the probability of the negative electrode active material being uniformly dispersed in the negative electrode slurry is extremely low, leading to uneven distribution of the negative electrode active material particles in the formed negative electrode active material layer. This affects the processing stability of the negative electrode plate, and causes uneven coating during application of the negative electrode slurry. Moreover, the specific surface area of the negative electrode active material particles is too large, increasing the contact interface between the negative electrode active material particles and the electrolyte, intensifying the side reactions. Particularly, under the high-kinetics electrolyte system for ultra-fast charging, the side reactions become excessively intense, accelerating the consumption of electrolyte and the generation of side reaction products, and deteriorating the cycling performance and high-temperature stability of the secondary battery. If the $D_v99$ of the negative electrode active material is greater than 28 μm, the $D_v99$ of the negative electrode active material is too large, resulting in an excessively long transmission path of lithium ions inside the negative electrode active material particles, and excessively large tortuosity during transmission inside the negative electrode plate. This causes excessive concentration polarization inside the secondary battery, increasing the internal resistance of the secondary battery and reducing the cycling kinetic performance of the secondary battery.

For example, based on the mass of the electrolyte, the mass percentage of the chain carboxylic acid ester is 6%, 10%, 15%, 20%, 25%, 30%, 35%, 40%, 45%, 50%, 56%, or any value in a range defined by any two of the above values. The chain carboxylic acid ester has high conductivity and low viscosity, and facilitates lithium ion transmission, allowing the

electrolyte to have high kinetic characteristics. If the mass percentage of the chain carboxylic acid ester is less than 6%, the content of the chain carboxylic acid ester in the electrolyte is too small to fully exert its own characteristics. If the mass percentage of the chain carboxylic acid ester is greater than 56%, the content of the chain carboxylic acid ester in the electrolyte is too much, and the contents of the lithium salt and additive in the electrolyte decrease accordingly. If the lithium salt content is insufficient, the charge-discharge performance of the secondary battery is affected. If the additive content is insufficient, the function of the additive cannot be effectively exerted, affecting the performance of the secondary battery corresponding to the additive.

For example, based on the mass of the electrolyte, the mass percentage of the nitrile additive is 0.01%, 1%, 2%, 3%, 4%, 5%, 6%, 7%, 8%, 9%, 10%, or any value in a range defined by any two of the above values. The nitrile additive can complex with transition metal ions in the positive electrode active material to form a protective cathode electrolyte interface (CEI) film on the surface of the positive electrode plate. This improves the structural stability of the positive electrode plate, and reduces side reactions between the positive electrode active material and the electrolyte, thereby improving the high-temperature stability of the secondary battery. If the mass percentage of the nitrile additive in the electrolyte is less than 0.01%, the mass percentage of the nitrile additive is too low to effectively exert its function, resulting in insignificant improvement in the high-temperature stability of the secondary battery. If the mass percentage of the nitrile additive in the electrolyte is greater than 10%, the mass percentage of the nitrile additive is too high, which reduces the mass percentages of other components in the electrolyte, such as organic solvents, lithium salts, and other additives, affecting the use performance of the secondary battery.

In general, by controlling the $D_v99$ of the positive electrode active material and the negative electrode active material within the above ranges, this application improves the surface activity of the positive and negative electrode active materials, shortens the transmission path of lithium ions inside the positive/negative electrode active materials during the transmission process, and reduces transmission tortuosity inside the positive/negative electrode plates. This reduces the concentration polarization of the secondary battery, allowing the secondary battery to have good cycling kinetic performance. In this application, by controlling the coating weight of the negative electrode active material layer and the relationship between the coating weights of the positive electrode active material layer and the negative electrode active material layer within the above ranges, the positive electrode active material layer and the negative electrode active material layer adopt low coating weights, which can reduce the thicknesses of the positive electrode active material layer and the negative electrode active material layer and increase the porosities of the positive electrode active material layer and the negative electrode active material layer. This, in turn, reduces the ohmic polarization and concentration polarization of the positive electrode plate and the negative electrode plate, and shortens the transmission distances of lithium ions and electrons inside the positive electrode plate and the negative electrode plate, thereby improving the charging rate of the secondary battery. In this application, by controlling the mass percentages of the chain carboxylic acid ester and the nitrile additive in the electrolyte within the above ranges, the electrolyte has low viscosity, allowing lithium ions to exhibit a fast transmission speed in the electrolyte. This reduces the electrochemical polarization and concentration polarization of the secondary battery, reduces the impedance of the secondary battery, reduces the temperature rise during ultra-fast charging of the secondary battery, and shortens the charging time, allowing the secondary battery to have good cycling kinetic performance. In addition, the nitrile additive has an appropriate content, which can protect the positive and negative electrode plates and reduce the side reactions between the electrolyte and the positive and negative electrode plates while maintaining the high kinetic performance of the secondary battery, thereby improving the high-temperature stability of the secondary battery. In this application, by combining the coating weight of the negative electrode active material layer, the relationship between the coating weights of the positive electrode active material layer and the negative electrode active material layer, the $D_v99$ of the positive electrode active material and the negative electrode active material, the electrolyte components and contents, a good synergistic effect can be achieved between the coating weight of the negative electrode active material layer, the relationship between the coating weights of the positive electrode active material layer and the negative electrode active material layer, the $D_v99$ of the positive electrode active material and the negative electrode active material, and the electrolyte. This can achieve high-temperature stability for the secondary battery while improving the cycling kinetic performance of the secondary battery.

In this application, $D_v99$ is a particle size where the cumulative distribution by volume reaches 99% as counted from the small particle size side. The "particles" in this application may be particles of a positive electrode active material or particles of a negative electrode active material. This application has no particular limitation on the method for controlling $D_v99$ of the positive electrode active material and the negative electrode active material, as long as the purpose of this application can be achieved. For example, the positive electrode active material and negative electrode active material with $D_v99$ within the ranges of this application may be directly purchased, or obtained by crushing, grinding, ball milling, or the like.

In one embodiment of this application, 6.49 mg/cm$^2$ $\leq W_z \leq$ 11.69 mg/cm$^2$. For example, $W_z$ is 6.49 mg/cm$^2$, 7 mg/cm$^2$, 7.5 mg/cm$^2$, 8 mg/cm$^2$, 8.5 mg/cm$^2$, 9 mg/cm$^2$, 9.5 mg/cm$^2$, 10 mg/cm$^2$, 10.5 mg/cm$^2$, 11 mg/cm$^2$, 11.69 mg/cm$^2$, or any value in a range defined by any two of the above values. By controlling the coating weight of the positive electrode active material layer within the range of this application, this application can shorten the transmission distance of lithium

ions and electrons on the positive electrode plate, which is beneficial to reduce the ohmic polarization and concentration polarization of the secondary battery. This, in turn, reduces the impedance of the secondary battery, allowing the secondary battery to have good cycling kinetic performance while achieving high-temperature stability.

In one embodiment of this application, 3.90 mg/cm$^2$ ≤ $W_f$ ≤ 5.19 mg/cm$^2$. For example, $W_f$ is 3.90 mg/cm$^2$, 4.00 mg/cm$^2$, 4.25 mg/cm$^2$, 4.50 mg/cm$^2$, 4.75 mg/cm$^2$, 5.00 mg/cm$^2$, 5.19 mg/cm$^2$, or any value in a range defined by any two of the above values. With $W_f$ controlled within the above range, the coating weight range of the negative electrode active material layer is more optimal, which is beneficial to further improve the cycling kinetic performance of the secondary battery while achieving high-temperature stability.

In one embodiment of this application, 7.80 mg/cm$^2$ ≤ $W_z$ ≤ 10.38 mg/cm$^2$. For example, $W_z$ is 7.80 mg/cm$^2$, 8.20 mg/cm$^2$, 8.50 mg/cm$^2$, 8.80 mg/cm$^2$, 9.00 mg/cm$^2$, 9.25 mg/cm$^2$, 9.50 mg/cm$^2$, 9.70 mg/cm$^2$, 10.00 mg/cm$^2$, 10.38 mg/cm$^2$, or any value in a range defined by any two of the above values. With $W_z$ controlled within the above range, the coating weight range of the positive electrode active material layer is more optimal, which is beneficial to further improve the cycling kinetic performance of the secondary battery while achieving high-temperature stability.

In one embodiment of this application, 3.90 mg/cm$^2$ ≤ $W_f$ ≤ 5.19 mg/cm$^2$, and 7.80 mg/cm$^2$ ≤ $W_z$ ≤ 10.38 mg/cm$^2$. For example, $W_f$ is 3.90 mg/cm$^2$, 4.00 mg/cm$^2$, 4.25 mg/cm$^2$, 4.50 mg/cm$^2$, 4.75 mg/cm$^2$, 5.00 mg/cm$^2$, 5.19 mg/cm$^2$, or any value in a range defined by any two of the above values. For example, $W_z$ is 7.80 mg/cm$^2$, 8.20 mg/cm$^2$, 8.50 mg/cm$^2$, 8.80 mg/cm$^2$, 9.00 mg/cm$^2$, 9.25 mg/cm$^2$, 9.50 mg/cm$^2$, 9.70 mg/cm$^2$, 10.00 mg/cm$^2$, 10.38 mg/cm$^2$, or any value in a range defined by any two of the above values. With $W_z$ and $W_f$ controlled within the above ranges, the coating weight ranges of the positive electrode active material layer and the negative electrode active material layer are both more optimal, which is beneficial to further improve the cycling kinetic performance of the secondary battery while achieving high-temperature stability.

In one embodiment of this application, the $D_v99$ of the positive electrode active material is 28 μm to 31 μm. For example, the $D_v99$ of the positive electrode active material is 28 μm, 29 μm, 30 μm, 31 μm, or any value in a range defined by any two of the above values. With the $D_v99$ of the positive electrode active material controlled within the above range, the range of the $D_v99$ of the positive electrode active material is more optimal, which is beneficial to further improve the cycling kinetic performance and high-temperature stability of the secondary battery.

In one embodiment of this application, the $D_v99$ of the negative electrode active material is 24 μm to 26 μm. For example, the $D_v99$ of the negative electrode active material is 24 μm, 25 μm, 26 μm, or any value in a range defined by any two of the above values. With the $D_v99$ of the negative electrode active material controlled within the above range, the range of the $D_v99$ of the negative electrode active material is more optimal, which is beneficial to further improve the cycling kinetic performance and high-temperature stability of the secondary battery.

In one embodiment of this application, the $D_v99$ of the positive electrode active material is 28 μm to 31 μm, and the $D_v99$ of the negative electrode active material is 24 μm to 26 μm. For example, the $D_v99$ of the positive electrode active material is 28 μm, 29 μm, 30 μm, 31 μm, or any value in a range defined by any two of the above values. The $D_v99$ of the negative electrode active material is 24 μm, 25 μm, 26 μm, or any value in a range defined by any two of the above values. With the $D_v99$ of the positive electrode active material and the negative electrode active material controlled within the above ranges, the ranges of the $D_v99$ of the positive electrode active material and the negative electrode active material are more optimal, which is beneficial to further improve the cycling kinetic performance and high-temperature stability of the secondary battery.

In one embodiment of this application, $D_v50$ of the positive electrode active material is 10 μm to 15 μm, and $D_v50$ of the negative electrode active material is 7 μm to 12 μm. For example, the $D_v50$ of the positive electrode active material is 10 μm, 11 μm, 12 μm, 13 μm, 14 μm, 15 μm, or any value in a range defined by any two of the above values. The $D_v50$ of the negative electrode active material is 7 μm, 8 μm, 9 μm, 10 μm, 11 μm, 12 μm, or any value in a range defined by any two of the above values. With the $D_v50$ of the positive electrode active material and the negative electrode active material controlled within the above ranges, the risk of agglomeration of the positive electrode active material in the positive electrode slurry is low, and the risk of agglomeration of the negative electrode active material in the negative electrode slurry is low. This can control the thicknesses of the positive electrode active material layer and the negative electrode active material within the appropriate ranges while allowing the positive electrode active material and the negative electrode active material to fulfill their respective functions, thereby reducing the risk of energy density loss caused by increased thickness. This allows the secondary battery to have a high energy density while balancing good cycling kinetic performance and high-temperature stability.

In this application, $D_v50$ is a particle size where the cumulative distribution by volume reaches 50% as counted from the small particle size side. The "particles" in this application may be a positive electrode active material or a negative electrode active material. This application has no particular limitation on the method for controlling $D_v50$ of the positive electrode active material and $D_v50$ of the negative electrode active material, as long as the purpose of this application can be achieved. For example, the positive electrode active material and negative electrode active material with $D_v50$ within the ranges of this application may be directly purchased, or obtained by crushing, grinding, ball milling, or the like.

In one embodiment of this application, the negative electrode active material includes at least one of a carbon-

based material, a silicon-based material, or a tin-based material, where the carbon-based material includes at least one of natural graphite, artificial graphite, soft carbon, hard carbon, or mesocarbon microbeads; the silicon-based material includes at least one of elemental silicon, a silicon-carbon material, or a silicon-oxygen material; and the tin-based material includes at least one of elemental tin, a tin alloy, or a tin oxide. The above types of negative electrode active materials have high surface activity, and when applied to the secondary battery, can increase the active sites for lithium ion intercalation and deintercalation, and reduce the electrochemical polarization of the secondary battery, thereby reducing the impedance of the secondary battery. This allows the secondary battery to have good cycling kinetic performance while achieving high-temperature stability.

In one embodiment of this application, for the carbon-based material, a peak intensity ratio $I_d/I_g$ of a D peak to a G peak obtained from Raman spectroscopy satisfies: $0.1 \leq I_d/I_g \leq 1.0$. For example, $I_d/I_g$ is 0.1, 0.2, 0.3, 0.4, 0.5, 0.6, 0.7, 0.8, 0.9, 1.0, or any value in a range defined by any two of the above values. This indicates that the surface of the carbon-based material contains amorphous carbon. The surface of the carbon-based material containing amorphous carbon can improve the electrochemical activity of the carbon-based material, allowing smoother intercalation of lithium ions during cycling of the secondary battery. This helps reduce the electrochemical polarization of the secondary battery, thereby reducing the internal impedance of the secondary battery and improving its cycling kinetic performance. Applying the carbon-based material satisfying the above $I_d/I_g$ value to the secondary battery allows the secondary battery to further improve its cycling kinetic performance while achieving good high-temperature stability.

In this application, the D peak is a peak in the Raman spectrum of carbon-based material particles with a shift range of 1300 $cm^{-1}$ to 1400 $cm^{-1}$, and the G peak is a peak in the Raman spectrum of carbon-based material particles with a shift range of 1530 $cm^{-1}$ to 1630 $cm^{-1}$.

This application has no particular limitation on the method for controlling the $I_d/I_g$ value, as long as the purpose of this application can be achieved. For example, commercially available carbon-based materials with different contents of amorphous carbon on the surface may be selected, and combined with the "Raman test" method in this application to determine the $I_d/I_g$ value of the carbon-based material and select the carbon-based material with the desired $I_d/I_g$ value.

This application has no particular limitation on the preparation method of the carbon-based material, as long as the purpose of this application can be achieved. For example, the preparation method of the carbon-based material may include but is not limited to: mixing the carbon-based material and amorphous carbon to uniformity, then heating to 500°C to 1500°C, and holding at that temperature for 10 h to 20 h to obtain a carbon-based material with amorphous carbon coating the surface.

In one embodiment of this application, the positive electrode active material includes at least one of lithium nickel cobalt manganese oxide, lithium nickel cobalt aluminum oxide, lithium iron phosphate, lithium-rich manganese-based material, lithium cobaltate, lithium manganate, lithium manganese iron phosphate, or lithium titanate. The chemical formula of the "lithium-rich manganese-based material" is LiMnO·LiMO, where M may include Ni, Co, or Mn. The above types of positive electrode active materials have high surface activity, and when applied to the secondary battery, can increase the active sites for lithium ion intercalation and deintercalation, and reduce the electrochemical polarization of the secondary battery, thereby reducing the impedance of the secondary battery. This allows the secondary battery to have good cycling kinetic performance while achieving high-temperature stability.

In one embodiment of this application, the positive electrode active material further includes a non-metal element, where the non-metal element includes at least one of fluorine, phosphorus, boron, chlorine, silicon, or sulfur. This application has no particular limitation on the content of the non-metal element in the positive electrode active material, as long as the purpose of this application can be achieved. In one embodiment, based on a mass of the positive electrode active material, a mass percentage of the non-metal element is 0.1% to 10%. For example, the mass percentage of the non-metal element is 0.1%, 1%, 2%, 3%, 4%, 5%, 6%, 7%, 8%, 9%, 10%, or any value in a range defined by any two of the above values. With the above types of non-metal elements included in the positive electrode active material, the stability of the positive electrode active material can be further improved.

In one embodiment of this application, the chain carboxylic acid ester includes at least one of methyl formate, methyl acetate, ethyl formate, ethyl acetate, propyl acetate, ethyl propionate, methyl propionate, n-propyl propionate, isopropyl propionate, methyl propionate, n-butyl propionate, isobutyl propionate, n-pentyl propionate, isopentyl propionate, ethyl butyrate, n-propyl butyrate, propyl isobutyrate, n-pentyl butyrate, n-pentyl isobutyrate, n-butyl butyrate, isobutyl isobutyrate, or n-pentyl valerate. The above types of chain carboxylic acid esters have high conductivity and low viscosity, facilitating lithium ion transmission. The use of the above types of chain carboxylic acid esters allows the secondary battery to have good cycling kinetic performance and high-temperature stability.

In one embodiment of this application, based on the mass of the electrolyte, a mass percentage of the chain carboxylic acid ester is 18% to 40%. For example, based on the mass of the electrolyte, the mass percentage of the chain carboxylic acid ester is 18%, 20%, 25%, 30%, 35%, 40%, or any value in a range defined by any two of the above values. With the mass percentage of the chain carboxylic acid ester controlled within the above range, lithium ions exhibit a faster transmission speed in the electrolyte, thereby further improving the cycling kinetic performance of the secondary battery while achieving good high-temperature stability.

In one embodiment of this application, the nitrile additive includes at least one of malononitrile, succinonitrile, glutaronitrile, adiponitrile, pimelonitrile, suberonitrile, sebaconitrile, 3,3'-oxydipropionitrile, hex-2-enedinitrile, trans-but-2-enedinitrile, 2-pentenedinitrile, methylglutaronitrile, 4-cyanoheptanedinitrile, (Z)-but-2-enedinitrile, 2,2,3,3-tetrafluorosuccinonitrile, ethylene glycol bis(propionitrile) ether, 1,3,5-pentanetricarbonitrile, 1,3,6-hexanetricarbonitrile, 1,2,6-hexanetricarbonitrile, 1,2,3-tris(2-cyanoethoxy)propane, 1,1,3,3-propanetetracarbonitrile, 2,2'-(1,4-phenylene)bispropanedinitrile, 1,1,5,5-pentanetetracarbonitrile, 1,1,4,4-butanetetracarbonitrile, or 1,1,6,6-hexanetetracarbonitrile. The use of the above types of nitrile additives is beneficial to further improve the high-temperature stability of the secondary battery while achieving good cycling kinetic performance.

In one embodiment of this application, based on the mass of the electrolyte, a mass percentage of the nitrile additive is 5% to 8%. For example, based on the mass of the electrolyte, the mass percentage of the nitrile additive is 5%, 5.5%, 6%, 6.5%, 7%, 7.5%, 8%, or any value in a range defined by any two of the above values. With the mass percentage of the nitrile additive controlled within the above range, it is beneficial to further improve the high-temperature stability of the secondary battery while achieving good cycling kinetic performance.

In one embodiment of this application, the organic solvent further includes at least one of ethylene carbonate, propylene carbonate, dimethyl carbonate, diethyl carbonate, methyl ethyl carbonate, $\gamma$-butyrolactone, or tetrahydrofuran; and based on the mass of the electrolyte, a mass percentage of the organic solvent is 60% to 80%. For example, based on the mass of the electrolyte, the mass percentage of the organic solvent is 60%, 64%, 67%, 70%, 73%, 78%, 80%, or any value in a range defined by any two of the above values. The above types of organic solvents feature good stability at high temperatures and fast lithium ion transmission speed at room temperature. Adding the above types of organic solvents to the electrolyte can further improve the high-temperature stability and cycling kinetic performance, reduce the charging speed, and reduce the temperature rise of the secondary battery. With the mass percentage of the organic solvent controlled within the above range, the solubility of the additive and lithium salt can be improved, allowing the electrolyte to have low viscosity and high conductivity. This facilitates the migration of lithium ions in the electrolyte, allowing the secondary battery to have good cycling kinetic performance and high-temperature stability.

In one embodiment of this application, based on the mass of the electrolyte, a mass percentage of the lithium salt is 10% to 20%. For example, the mass percentage of the lithium salt is 10%, 12%, 14%, 16%, 18%, 20%, or any value in a range defined by any two of the above values. With the mass percentage of the lithium salt within the above range, the lithium salt has high solubility in the electrolyte, allowing the electrolyte to have high conductivity, thereby improving the cycling kinetic performance and high-temperature stability of the secondary battery. This application has no particular limitation on the type of the lithium salt, as long as the purpose of this application can be achieved. For example, the lithium salt includes but is not limited to at least one of lithium hexafluorophosphate, lithium difluorophosphate, lithium tetrafluoroborate, lithium hexafluoroarsenate, lithium perchlorate, lithium bis(fluorosulfonyl)imide, lithium bis(trifluoromethanesulfonyl)imide, lithium bis(oxalato)borate, or lithium difluoro(oxalato)borate.

In one embodiment of this application, the electrolyte includes a lithium salt, an organic solvent, and an additive, where the additive includes a nitrile additive and another additive; and based on the mass of the electrolyte, a mass percentage of the additive is 10% to 20%. This application has no particular limitation on the type of the another additive, as long as the purpose of this application can be achieved. For example, the another additive includes a solid electrolyte interface (SEI) film-forming additive, a flame-retardant additive, an overcharge prevention additive, and a conductive additive. For example, the another additive includes but is not limited to at least one of fluoroethylene carbonate (FEC), vinylene carbonate (VC), or ethylene sulfate (DTD).

The positive electrode plate of this application includes a positive electrode current collector and a positive electrode active material layer provided on at least one surface of the positive electrode current collector. In some embodiments, the positive electrode active material layer is provided on one surface of the positive electrode current collector. In some other embodiments, the positive electrode active material layer is provided on both surfaces of the positive electrode current collector. The "surface" may be part or all of the surface of the positive electrode current collector. This application has no particular limitation on the type of the positive electrode current collector, as long as the purpose of this application can be achieved. For example, the positive electrode current collector may include but is not limited to aluminum foil or aluminum alloy foil. The positive electrode active material layer of this application includes the positive electrode active material described in the foregoing embodiments. This application has no particular limitation on the thicknesses of the positive electrode current collector and the positive electrode active material layer, as long as the purpose of this application can be achieved. For example, the thickness of the positive electrode current collector is 5 $\mu$m to 20 $\mu$m. Further, the thickness of the positive electrode current collector may be 6 $\mu$m to 18 $\mu$m. The thickness of the positive electrode active material layer is 30 $\mu$m to 120 $\mu$m.

Optionally, the positive electrode active material layer may further include a positive electrode conductive agent and a positive electrode binder. This application has no particular limitation on the types of the positive electrode conductive agent and the positive electrode binder in the positive electrode active material layer, as long as the purpose of this application can be achieved. This application has no particular limitation on the mass ratio of the positive electrode active material, positive electrode conductive agent, and positive electrode binder in the positive electrode active material

layer. Those skilled in the art can make selection according to actual needs, as long as the purpose of this application can be achieved. For example, the mass ratio of the positive electrode active material, positive electrode conductive agent, and positive electrode binder in the positive electrode active material layer is (95-98):(0.5-3.5):(1.5-3.4).

The negative electrode plate of this application includes a negative electrode current collector and a negative electrode active material layer provided on at least one surface of the negative electrode current collector. In some embodiments, the negative electrode active material layer is provided on one surface of the negative electrode current collector. In some other embodiments, the negative electrode active material layer is provided on both surfaces of the negative electrode current collector. The "surface" may be part or all of the surface of the negative electrode current collector. This application has no particular limitation on the type of the negative electrode current collector, as long as the purpose of this application can be achieved. For example, the negative electrode current collector includes but is not limited to copper foil, copper alloy foil, nickel foil, titanium foil, foamed nickel, or foamed copper. The negative electrode active material layer of this application includes the negative electrode active material described in the foregoing embodiments. This application has no particular limitation on the thicknesses of the negative electrode current collector and the negative electrode active material layer, as long as the purpose of this application can be achieved. For example, the thickness of the negative electrode current collector is 6 μm to 10 μm, and the thickness of the negative electrode active material layer is 30 μm to 130 μm.

Optionally, the negative electrode active material layer may further include at least one of a negative electrode conductive agent, a stabilizer, or a negative electrode binder. This application has no particular limitation on the types of the negative electrode conductive agent, the stabilizer, and the negative electrode binder in the negative electrode active material layer, as long as the purpose of this application can be achieved. This application has no particular limitation on the mass ratio of the negative electrode active material, negative electrode conductive agent, stabilizer, and negative electrode binder in the negative electrode active material layer, as long as the purpose of this application can be achieved. For example, the mass ratio of the negative electrode active material, negative electrode conductive agent, stabilizer, and negative electrode binder in the negative electrode active material layer is (96-98):(0.5-2):(0-1.5):(1.0-1.9).

This application has no particular limitation on the separator in the secondary battery, as long as the purpose of this application can be achieved. For example, the separator includes at least one of polyethylene (PE), polypropylene (PP), polyethylene terephthalate (PET), polyimide (PI), or aramid. For example, polyethylene includes at least one selected from high-density polyethylene, low-density polyethylene, and ultra-high molecular weight polyethylene. The separator of this application may have a porous structure. This application has no particular limitation on the pore size of the porous structure of the separator, as long as the purpose of this application can be achieved. For example, the pore size may be 0.01 μm to 1 μm. This application has no particular limitation on the thickness of the separator, as long as the purpose of this application can be achieved. For example, the thickness of the separator may be 5 μm to 500 μm.

In one embodiment of this application, the secondary battery further includes a housing, where the electrode assembly and the electrolyte are accommodated in the housing. This application has no particular limitation on the housing, which may be a housing well known in the art, as long as the purpose of this application can be achieved. For example, the housing includes but is not limited to an aluminum-plastic film or a steel shell.

This application has no particular limitation on the type of the secondary battery, which may include any apparatus where electrochemical reactions take place. For example, the secondary battery may include but is not limited to: a lithium metal secondary battery, a lithium-ion secondary battery (lithium-ion battery), a sodium-ion secondary battery (sodium-ion battery), a lithium polymer secondary battery, and a lithium-ion polymer secondary battery.

The secondary battery of this application can be used under ultra-fast charging conditions, and specifically, can be used at a charging rate of 5C to 15C. For example, the charging rate of the secondary battery may be 5C, 6C, 7C, 8C, 9C, 10C, 11C, 12C, 13C, 14C, 15C, or any rate in a range defined by any two of the above rates.

This application has no particular limitation on the preparation method of the secondary battery, and a preparation method well known in the art can be selected, as long as the purpose of this application can be achieved. For example, the preparation method of the secondary battery includes but is not limited to the following steps: stacking the separator, the positive electrode plate, the separator, and the negative electrode plate in order, winding or folding the resulting stack as needed to obtain a wound electrode assembly, placing the electrode assembly into the housing, injecting the electrolyte into the housing, and sealing the housing, to obtain the secondary battery; or stacking the separator, the positive electrode plate, the separator, and the negative electrode plate in order, fixing the four corners of the entire laminated structure to obtain a laminated electrode assembly, placing the electrode assembly into the housing, injecting the electrolyte into the housing, and sealing the housing, to obtain the secondary battery.

A second aspect of this application provides an electric device including the secondary battery described in any one of the foregoing embodiments. Therefore, the electric device has good use performance.

The electric device of this application is not particularly limited, and may be any electric device known in the prior art. For example, the electric device may include but is not limited to: a notebook computer, a pen-input computer, a mobile computer, an e-book player, a portable phone, a portable fax machine, a portable copier, a portable printer, a head-mounted stereo headphone, a video recorder, an LCD television, a portable cleaner, a portable CD player, a mini disc, a

transceiver, an electronic organizer, a calculator, a memory card, a portable recorder, a radio, a backup power supply, a motor, an automobile, a motorcycle, a power-assisted bicycle, a bicycle, a lighting fixture, a toy, a game console, a clock, an electric tool, a flashlight, a camera, a household large-scale storage battery, and a lithium-ion capacitor.

## Examples

The following describes the embodiments of this application more specifically by using examples and comparative examples. Various tests and evaluations are conducted according to the methods described below.

### Test methods and equipment:

#### Test for $D_v50$ and $D_v99$:

The $D_v50$ and $D_v99$ of the positive electrode active material and the negative electrode active material are measured using a laser particle size analyzer.

#### Coating weight test:

#### (1) Test for coating weight $W_z$ of positive electrode active material layer:

The lithium-ion battery was discharged at 0.5C to 3.0 V, and then disassembled to obtain the positive electrode plate. The positive electrode plate was soaked in the dimethyl carbonate (DMC) solution for 4 h, and air-dried. A sample with an area of A $mm^2$ was cut from the positive electrode plate and weighed on a balance, with the weight recorded as $p_1$. Then the positive electrode active material layer was washed off the positive electrode plate, and the positive electrode current collector was weighed on a balance, with the weight recorded as $p_2$.

If it is a positive electrode plate with single-side coating of the positive electrode active material layer, $W_z = (p_1 - p_2)/A$.

If it is a positive electrode plate with double-side coating of the positive electrode active material layer, $W_z = (p_1 - p_2)/2A$.

#### (2) Test for coating weight $W_f$ of negative electrode active material layer:

The lithium-ion battery was discharged at 0.5C to 3.0 V, and disassembled to obtain the negative electrode plate. The negative electrode plate was soaked in the DMC solution for 4 h, and air-dried. A sample with an area of B $mm^2$ was cut from the negative electrode plate, and weighed on a balance, with the weight recorded as $q_1$. Then the negative electrode active material layer was washed off the negative electrode plate, and the negative electrode current collector was weighed on a balance, with the weight recorded as $q_2$.

If it is a negative electrode plate with single-side coating of the negative electrode active material layer, $W_f = (q_1 - q_2)/B$.

If it is a negative electrode plate with double-side coating of the negative electrode active material layer, $W_f = (q_1 - q_2)/2B$.

#### Raman (Raman) test:

The lithium-ion battery was discharged at 0.5C to 3.0 V, and then disassembled to obtain the negative electrode plate. The negative electrode plate was soaked in the DMC solution for 4 h, and air-dried. An area of 100 $\mu$m $\times$ 100 $\mu$m was selected on the negative electrode active material layer, and the negative electrode active material particles in this area were scanned using a laser confocal Raman spectrometer (Raman, HR Evolution, HORIBA Scientific), to obtain the D peak and G peak of all negative electrode active material particles in this area. The data was processed using LabSpec software, to obtain the peak intensities of the D peak and G peak for each negative electrode active material particle, denoted as $I_d$ and $I_g$ respectively. The laser wavelength of the Raman spectrometer is in the range of 532 nm to 785 nm. The value of $I_d/I_g$ is the average value of the $I_d$ to $I_g$ ratios of all negative electrode active material particles measured in this range.

#### Test for cycling kinetic performance:

The lithium-ion batteries of each example and comparative example were tested for cycling kinetic performance under a charging rate of 10C. The specific steps are as follows:

(I) The test temperature was adjusted to constant 25°C, the temperature sensing line of the multi-channel thermometer was placed at the center of the surface of the lithium-ion battery, and the following steps were performed: (1) charging to 4.2 V at a constant current of 10C; (2) charging to 4.3 V at a constant current of 7C; (3) charging to 4.45 V at a constant current charge of 5C; (4) charging to 0.05C at a constant voltage of 4.45 V; (5) left standing for 30 min; (6) discharging to 3.0 V at a constant current of 1C; (7) left standing for 30 min; end.

charging speed: the time from step (1) to step (4) in step (I);
charging temperature rise: the difference between the maximum temperature recorded by the temperature sensing line on the surface of the lithium-ion battery during the process from step (1) to step (4) in step (I) and the room temperature.

(II) The test temperature was adjusted to constant 25°C, and the test was started: (1) charging to 4.2 V at a constant current of 10C; (2) charging to 4.3 V at a constant current of 7C; (3) charging to 4.45 V at a constant current charge of 5C; (4) charging to 0.05C at a constant voltage of 4.45 V; (5) left standing for 5 min; (6) discharging to 3.0 V at a constant current of 1C; (7) left standing for 5 min; (8) Cycle repeating steps (1) to (7) for 1000 cycles (cls); end.

Capacity retention rate (%) = discharge capacity after 1000 cycles/first-cycle discharge capacity $\times$ 100%.

The cycling kinetic performance was characterized by the charging speed, charging temperature rise, and capacity retention rate. A shorter charging time and a smaller charging temperature rise indicate better initial kinetic performance of the lithium-ion battery. A higher capacity retention rate indicates better cycling performance of the lithium-ion battery.

**Test for high-temperature stability:**

The thickness of the prepared lithium-ion battery, also referred to as the initial thickness of the lithium-ion battery, was measured.

The lithium-ion battery was fully charged according to the following steps: charging to 4.45 V at a constant current of 0.7C, and charging to 0.02C at a constant voltage of 4.45 V.

The lithium-ion battery was placed in a high and low temperature box at 90°C for 8 h, and then the thickness of the lithium-ion battery was measured. The test ended.

Swelling rate of lithium-ion battery = (thickness of lithium-ion battery after high-temperature storage - initial thickness of lithium-ion battery)/initial thickness of lithium-ion battery $\times$ 100%. The high-temperature stability was characterized by the swelling rate. A smaller swelling rate indicates a better high-temperature stability.

**Example 1-1**

<Preparation of positive electrode plate>

The positive electrode active material lithium cobaltate, the positive electrode conductive agent carbon nanotubes, and the positive electrode binder polyvinylidene fluoride (PVDF, Mw=$7\times10^6$) were mixed in a mass ratio of 95:3:2, N-methylpyrrolidone (NMP) was added as a solvent, and the resulting mixture was stirred in a vacuum mixer until a positive electrode slurry with a solid content of 75wt% and a uniform system was obtained. The positive electrode slurry was evenly applied to one surface of a 10 μm-thick positive electrode current collector aluminum foil, followed by drying at 95°C, to obtain a positive electrode plate with single-side coating of the positive electrode active material layer. Then, the above steps were repeated on the other surface of the aluminum foil to obtain a positive electrode plate with double-side coating of the positive electrode active material layer. After cold pressing, slitting, and stripping, drying at 85°C was performed for 4 h under vacuum to obtain a positive electrode plate with a specification of 55 mm $\times$ 1400 mm for later use. The single-layer thickness of the positive electrode active material layer was 37.3 μm, and the thickness of the positive electrode plate was 84.6 μm. Then 18 positive electrode tabs were integrally formed by die-cutting in the tab area of the positive electrode current collector, and the compacted density of the positive electrode plate was 37 g/cm$^3$. The $D_v99$ of lithium cobaltate was 30 μm, and the $D_v50$ was 13 μm. The coating weight $W_z$ of the positive electrode active material layer was 10.38 mg/cm$^2$.

<Preparation of negative electrode plate>

The negative electrode active material artificial graphite, the negative electrode conductive agent Super P, the

stabilizer sodium carboxymethyl cellulose (CMC-Na, Mw=$7\times10^5$), and the negative electrode binder styrene-butadiene rubber (SBR, Mw=$5\times10^6$) were mixed in a mass ratio of 97:1:1:1, then deionized water was added as a solvent, and the resulting mixture was stirred in a vacuum mixer until a negative electrode slurry with a solid content of 51wt% and a uniform system was obtained. The negative electrode slurry was evenly applied to one surface of a 7 μm-thick negative electrode current collector copper foil, followed by drying at 85°C, to obtain a negative electrode plate with single-side coating of the negative electrode active material layer. Then, the above steps were repeated on the other surface of the copper foil to obtain a negative electrode plate with double-side coating of the negative electrode active material layer. After cold pressing, slitting, and stripping, drying at 110°C was performed for 4 h under vacuum to obtain a negative electrode plate with a specification of 58 mm × 1500 mm for later use. The single-layer thickness of the negative electrode active material layer was 58.5 μm, and the thickness of the negative electrode plate was 124 μm. Then 18 negative electrode tabs were integrally formed by die-cutting in the tab area of the negative electrode current collector, and the compacted density of the negative electrode plate was 1.7 g/cm$^3$. The $D_v99$ of artificial graphite was 25 μm, and the $D_v50$ was 9 μm. The coating weight $W_f$ of the negative electrode active material layer was 5.19 mg/cm$^2$.

<Preparation of electrolyte>

In an environment with a water content of less than 10 ppm, the organic solvent, lithium salt, and additive were formulated in a mass ratio of 80:10:10 to obtain the electrolyte. Lithium hexafluorophosphate was selected as the lithium salt, succinonitrile was selected as the nitrile additive, fluoroethylene carbonate (FEC) was selected as other additives, and n-propyl propionate, ethylene carbonate, and diethyl carbonate were selected as the organic solvent, where the mass ratio of n-propyl propionate, ethylene carbonate, and diethyl carbonate was 40:30:30. Based on the mass of the electrolyte, the mass percentage of the chain carboxylic acid ester $W_1$ was 40% × 80% = 32%, the mass percentage of ethylene carbonate $W_2$ was 30% × 80% = 24%, the mass percentage of diethyl carbonate $W_3$ was 30% × 80% = 24%, the mass percentage of the nitrile additive was 2%, and the remainder was the lithium salt and other additives (FEC).

<Preparation of separator>

A porous polyethylene membrane with a thickness of 15 μm was selected as the separator.

<Preparation of lithium-ion battery>

The separator, positive electrode plate, separator, and negative electrode plate were stacked in order, with the separator sandwiched between the positive electrode plate and the negative electrode plate for separation. The resulting stack was wound to obtain the electrode assembly. The electrode assembly was placed in an aluminum-plastic film housing and dried. Then the electrolyte was injected, and processes such as vacuum packaging, standing, formation, capacity testing, degassing, and trimming were performed to obtain the lithium-ion battery.

**Examples 1-2 to 1-33**

The rest steps were the same as Example 1-1, except that the related preparation parameters were adjusted according to Table 1.

When the mass percentage of the chain carboxylic acid ester changes, the mass percentages of ethylene carbonate and diethyl carbonate change accordingly. When the mass percentage of the nitrile additive changes, the mass percentage of other additives changes accordingly, while the mass ratio of lithium salt, organic solvent, and additive remains unchanged. The sum of the mass percentages of the chain carboxylic acid ester, ethylene carbonate, and diethyl carbonate is $W_1 + W_2 + W_3 = 80\%$, and $W_2 = W_3$. The sum of the mass percentages of lithium salt, organic solvent, and additive is 100%.

**Examples 2-1 to 2-5**

The rest steps were the same as Example 1-1, except that the related preparation parameters were adjusted according to Table 1.

**Example 2-6**

The rest steps were the same as Example 1-1, except that in <Preparation of electrolyte>, the mass ratio of lithium salt, organic solvent, and additive was adjusted to 20:60:20.

**Example 2-7**

The rest steps were the same as Example 1-1, except that in <Preparation of electrolyte>, the mass ratio of lithium salt, organic solvent, and additive was adjusted to 15:70:15.

**Example 2-8**

The rest steps were the same as Example 1-1, except that in <Preparation of electrolyte>, the mass ratio of lithium salt, organic solvent, and additive was adjusted to 22.5:55:22.5.

**Example 2-9**

The rest steps were the same as Example 1-1, except that in <Preparation of electrolyte>, the mass ratio of lithium salt, organic solvent, and additive was adjusted to 7.5:85:7.5.

**Example 3-1**

The rest steps were the same as Example 1-1, except that the related preparation parameters were adjusted according to Table 3.

**Examples 3-2 to 3-4**

The rest steps were the same as Example 1-1, except that in <Preparation of negative electrode plate>, artificial graphite with amorphous carbon coating the surface was selected as the negative electrode active material. The mass ratio of artificial graphite to amorphous carbon was adjusted according to Table 3.

**Examples 3-5 and 3-6**

The rest steps were the same as Example 1-1, except that the related preparation parameters were adjusted according to Table 3.

**Comparative Examples 1 to 18**

The rest steps were the same as Example 1-1, except that the related preparation parameters were adjusted according to Table 1.

When the mass percentage of the chain carboxylic acid ester changes, the mass percentages of ethylene carbonate and diethyl carbonate change accordingly. When the mass percentage of the nitrile additive changes, the mass percentage of other additives changes accordingly, while the mass ratio of lithium salt, organic solvent, and additive remains unchanged. The sum of the mass percentages of the chain carboxylic acid ester, ethylene carbonate, and diethyl carbonate is $W_1 + W_2 + W_3 = 80\%$, and $W_2 = W_3$. The sum of the mass percentages of lithium salt, organic solvent, and additive is 100%.

The preparation parameters and performance parameters of each example and comparative example are shown in Tables 1 to 3.

Table 1

| | $D_v99$ of negative electrode active material (μm) | $D_v50$ of negative electrode active material (μm) | $D_v99$ of positive electrode active material (μm) | $D_v50$ of positive electrode active material (μm) | $W_f$ (mg/cm$^2$) | $W_z/W_f$ | $W_z$ (mg/cm$^2$) | Mass percentage of chain carboxylic acid ester (%) | Mass percentage of nitrile additive (%) | Charging speed at 10C (min) | Charging temperature rise at 10C (°C) | Capacity retention rate after 1000 cycles at 25°C (%) | Swelling rate (%) |
|---|---|---|---|---|---|---|---|---|---|---|---|---|---|
| Example 1-1 | 25 | 9 | 30 | 13 | 5.19 | 2.0 | 10.38 | 32 | 2 | 15.37 | 18.73 | 85.25 | 8.33 |
| Example 1-2 | 25 | 9 | 30 | 13 | 3.25 | 2.0 | 6.50 | 32 | 2 | 12.22 | 15.54 | 70.62 | 8.08 |
| Example 1-3 | 25 | 9 | 30 | 13 | 3.90 | 2.0 | 7.80 | 32 | 2 | 13.42 | 16.85 | 84.23 | 8.42 |
| Example 1-4 | 25 | 9 | 30 | 13 | 4.00 | 2.0 | 8.00 | 32 | 2 | 14.02 | 17.25 | 85.87 | 8.42 |
| Example 1-5 | 25 | 9 | 30 | 13 | 4.54 | 2.0 | 9.08 | 32 | 2 | 14.53 | 17.65 | 85.68 | 8.54 |
| Example 1-6 | 25 | 9 | 30 | 13 | 5.00 | 2.0 | 10.00 | 32 | 2 | 15.32 | 18.86 | 83.28 | 8.43 |
| Example 1-7 | 25 | 9 | 30 | 13 | 5.84 | 2.0 | 11.68 | 32 | 2 | 17.42 | 21.84 | 75.22 | 8.35 |
| Example 1-8 | 25 | 9 | 30 | 13 | 5.19 | 1.6 | 8.30 | 32 | 2 | 15.02 | 17.92 | 75.44 | 10.48 |
| Example 1-9 | 25 | 9 | 30 | 13 | 5.19 | 2.2 | 11.42 | 32 | 2 | 16.43 | 19.63 | 72.22 | 7.21 |
| Example 1-10 | 23 | 7 | 30 | 13 | 5.19 | 2.0 | 10.38 | 32 | 2 | 15.25 | 18.64 | 80.63 | 9.85 |
| Example 1-11 | 24 | 8 | 30 | 13 | 5.19 | 2.0 | 10.38 | 32 | 2 | 15.36 | 18.82 | 82.45 | 8.83 |
| Example 1-12 | 26 | 10 | 30 | 13 | 5.19 | 2.0 | 10.38 | 32 | 2 | 15.48 | 18.88 | 83.83 | 8.28 |
| Example 1-13 | 28 | 12 | 30 | 13 | 5.19 | 2.0 | 10.38 | 32 | 2 | 15.52 | 18.96 | 80.26 | 8.33 |
| Example 1-14 | 25 | 9 | 27 | 10 | 5.19 | 2.0 | 10.38 | 32 | 2 | 15.18 | 18.53 | 80.63 | 9.36 |
| Example 1-15 | 25 | 9 | 28 | 11 | 5.19 | 2.0 | 10.38 | 32 | 2 | 15.22 | 18.65 | 83.47 | 9.02 |
| Example 1-16 | 25 | 9 | 31 | 14 | 5.19 | 2.0 | 10.38 | 32 | 2 | 15.46 | 18.82 | 83.22 | 8.28 |
| Example 1-17 | 25 | 9 | 33 | 15 | 5.19 | 2.0 | 10.38 | 32 | 2 | 15.69 | 18.99 | 81.47 | 8.24 |

(continued)

| | $D_v99$ of negative electrode active material (μm) | $D_v50$ of negative electrode active material (μm) | $D_v99$ of positive electrode active material (μm) | $D_v50$ of positive electrode active material (μm) | $W_f$ (mg/cm$^2$) | $W_z/W_f$ | $W_z$ (mg/cm$^2$) | Mass percentage of chain carboxylic acid ester (%) | Mass percentage of nitrile additive (%) | Charging speed at 10C (min) | Charging temperature rise at 10C (°C) | Capacity retention rate after 1000 cycles at 25°C (%) | Swelling rate (%) |
|---|---|---|---|---|---|---|---|---|---|---|---|---|---|
| Example 1-18 | 25 | 9 | 30 | 13 | 5.19 | 2.0 | 10.38 | 6 | 2 | 17.33 | 20.84 | 70.44 | 5.96 |
| Example 1-19 | 25 | 9 | 30 | 13 | 5.19 | 2.0 | 10.38 | 16 | 2 | 17.25 | 19.48 | 73.28 | 6.71 |
| Example 1-20 | 25 | 9 | 30 | 13 | 5.19 | 2.0 | 10.38 | 18 | 2 | 17.02 | 18.88 | 82.44 | 7.16 |
| Example 1-21 | 25 | 9 | 30 | 13 | 5.19 | 2.0 | 10.38 | 40 | 2 | 15.07 | 18.16 | 86.46 | 9.23 |
| Example 1-22 | 25 | 9 | 30 | 13 | 5.19 | 2.0 | 10.38 | 56 | 2 | 13.24 | 16.14 | 80.23 | 18.46 |
| Example 1-23 | 25 | 9 | 30 | 13 | 5.19 | 2.0 | 10.38 | 32 | 0.01 | 15.28 | 18.73 | 85.02 | 16.84 |
| Example 1-24 | 25 | 9 | 30 | 13 | 5.19 | 2.0 | 10.38 | 32 | 0.5 | 15.24 | 18.75 | 85.15 | 14.37 |
| Example 1-25 | 25 | 9 | 30 | 13 | 5.19 | 2.0 | 10.38 | 32 | 1 | 15.23 | 18.72 | 85.33 | 11.72 |
| Example 1-26 | 25 | 9 | 30 | 13 | 5.19 | 2.0 | 10.38 | 32 | 5 | 15.76 | 19.24 | 84.37 | 8.06 |
| Example 1-27 | 25 | 9 | 30 | 13 | 5.19 | 2.0 | 10.38 | 32 | 7 | 16.52 | 19.83 | 83.69 | 7.24 |
| Example 1-28 | 25 | 9 | 30 | 13 | 5.19 | 2.0 | 10.38 | 32 | 8 | 16.96 | 20.18 | 82.14 | 7.02 |
| Example 1-29 | 25 | 9 | 30 | 13 | 5.19 | 2.0 | 10.38 | 32 | 10 | 17.36 | 22.44 | 75.16 | 6.89 |
| Example 1-30 | 24 | 5 | 30 | 13 | 5.19 | 2.0 | 10.38 | 32 | 2 | 15.25 | 18.56 | 78.32 | 9.54 |

(continued)

| | $D_v99$ of negative electrode active material (μm) | $D_v50$ of negative electrode active material (μm) | $D_v99$ of positive electrode active material (μm) | $D_v50$ of positive electrode active material (μm) | $W_f$ (mg/cm$^2$) | $W_z/W_f$ | $W_z$ (mg/cm$^2$) | Mass percentage of chain carboxylic acid ester (%) | Mass percentage of nitrile additive (%) | Charging speed at 10C (min) | Charging temperature rise at 10C (°C) | Capacity retention rate after 1000 cycles at 25°C (%) | Swelling rate (%) |
|---|---|---|---|---|---|---|---|---|---|---|---|---|---|
| Example 1-31 | 27 | 15 | 30 | 13 | 5.19 | 2.0 | 10.38 | 32 | 2 | 15.52 | 19.02 | 75.33 | 8.18 |
| Example 1-32 | 25 | 9 | 27 | 8 | 5.19 | 2.0 | 10.38 | 32 | 2 | 15.13 | 18.65 | 76.43 | 9.72 |
| Example 1-33 | 25 | 9 | 32 | 17 | 5.19 | 2.0 | 10.38 | 32 | 2 | 15.62 | 19.04 | 72.16 | 8.15 |
| Comparative Example 1 | 25 | 9 | 30 | 13 | 2.50 | 2.0 | 5.00 | 32 | 2 | 12.06 | 15.33 | 82.62 | 12.33 |
| Comparative Example 2 | 25 | 9 | 30 | 13 | 7.79 | 2.0 | 15.58 | 32 | 2 | 18.42 | 21.88 | 59.27 | 9.38 |
| Comparative Example 3 | 25 | 9 | 30 | 13 | 5.19 | 1.4 | 7.27 | 32 | 2 | 15.57 | 19.05 | 55.43 | 25.34 |
| Comparative Example 4 | 25 | 9 | 30 | 13 | 5.19 | 2.4 | 12.46 | 32 | 2 | 15.34 | 18.47 | 35.22 | 7.07 |
| Comparative Example 5 | 20 | 4 | 30 | 13 | 5.19 | 2.0 | 10.38 | 32 | 2 | 15.17 | 18.42 | 62.61 | 18.32 |
| Comparative Example 6 | 30 | 14 | 30 | 13 | 5.19 | 2.0 | 10.38 | 32 | 2 | 17.74 | 22.05 | 65.46 | 8.27 |
| Comparative Example 7 | 25 | 9 | 25 | 8 | 5.19 | 2.0 | 10.38 | 32 | 2 | 15.28 | 18.52 | 53.37 | 22.42 |
| Comparative Example 8 | 25 | 9 | 35 | 18 | 5.19 | 2.0 | 10.38 | 32 | 2 | 18.64 | 21.05 | 54.25 | 8.26 |
| Comparative Example 9 | 25 | 9 | 30 | 13 | 5.19 | 2.0 | 10.38 | 3 | 2 | 23.26 | 23.43 | 44.24 | 6.93 |
| Comparative Example 10 | 25 | 9 | 30 | 13 | 5.19 | 2.0 | 10.38 | 64 | 2 | 13.73 | 16.57 | 66.27 | 33.98 |

(continued)

|  | $D_v99$ of negative electrode active material (μm) | $D_v50$ of negative electrode active material (μm) | $D_v99$ of positive electrode active material (μm) | $D_v50$ of positive electrode active material (μm) | $W_f$ (mg/ cm$^2$) | $W_z/W_f$ | $W_z$ (mg/ cm$^2$) | Mass percentage of chain carboxylic acid ester (%) | Mass percentage of nitrile additive (%) | Charging speed at 10C (min) | Charging temperature rise at 10C (°C) | Capacity retention rate after 1000 cycles at 25°C (%) | Swelling rate (%) |
|---|---|---|---|---|---|---|---|---|---|---|---|---|---|
| Comparative Example 11 | 25 | 9 | 30 | 13 | 5.19 | 2.0 | 10.38 | 32 | \ | 15.22 | 18.84 | 55.32 | 26.75 |
| Comparative Example 12 | 25 | 9 | 30 | 13 | 5.19 | 2.0 | 10.38 | 32 | 11 | 18.05 | 21.26 | 63.38 | 6.66 |
| Comparative Example 13 | 20 | 4 | 25 | 8 | 2.50 | 2.0 | 5.00 | 32 | 2 | 11.87 | 15.12 | 42.65 | 46.33 |
| Comparative Example 14 | 30 | 14 | 35 | 18 | 7.79 | 2.0 | 15.58 | 32 | 2 | 22.63 | 23.94 | 58.29 | 8.14 |
| Comparative Example 15 | 20 | 4 | 25 | 8 | 2.50 | 1.4 | 3.50 | 3 | 2 | 23.69 | 23.92 | 34.23 | 37.32 |
| Comparative Example 16 | 30 | 14 | 35 | 18 | 7.79 | 2.4 | 18.70 | 64 | 2 | 23.92 | 26.82 | 52.22 | 9.95 |
| Comparative Example 17 | 20 | 4 | 25 | 8 | 2.50 | 2.0 | 5.00 | 3 | \ | 23.84 | 23.95 | 34.25 | 27.33 |
| Comparative Example 18 | 30 | 14 | 35 | 18 | 7.79 | 2.0 | 15.58 | 64 | 12 | 24.52 | 27.21 | 65.43 | 11.77 |

Note: "\" in Table 1 indicates no corresponding parameter.

From Examples 1-1 to 1-29 and Comparative Examples 1 to 18, it can be seen that in the secondary battery of each example of this application, by setting the ratio $W_z/W_f$ of the coating weight $W_z$ of the positive electrode active material layer to the coating weight $W_f$ of the negative electrode active material layer and the value of $W_f$ within the ranges of this application, and the $D_v99$ of the positive electrode active material and the $D_v99$ of the negative electrode active material within the ranges of this application, and the percentages of the chain carboxylic acid ester and nitrile additive in the electrolyte within the ranges of this application, the secondary battery exhibit a short charging time (that is, a high charging speed), a low charging temperature rise, a high capacity retention rate at a charging rate of 10C, and a low swelling rate in thickness after storage at 90°C for 8 h, that is, the secondary battery of each example of this application can have short charging time, low charging temperature rise, high capacity retention rate, and low swelling rate at the same time. This indicates that the secondary battery of each example of this application can achieve high-temperature stability while maintaining good cycling kinetic performance under ultra-fast charging conditions, meaning that the secondary battery of each example of this application has better comprehensive performance under ultra-fast charging conditions. For the secondary batteries of Comparative Examples 1 and 2, the coating weight $W_f$ of the negative electrode active material layer is not within the range of this application. For the secondary batteries of Comparative Examples 3 and 4, the ratio $W_z/W_f$ of the coating weight $W_z$ of the positive electrode active material layer to the coating weight $W_f$ of the negative electrode active material layer is not within the range of this application. For the secondary batteries of Comparative Examples 5 and 6, the $D_v99$ of the negative electrode active material is not within the range of this application. For the secondary batteries of Comparative Examples 7 and 8, the $D_v99$ of the positive electrode active material is not within the range of this application. For the secondary batteries of Comparative Examples 9 and 10, the percentage of the chain carboxylic acid ester in the electrolyte is not within the range of this application. For the secondary batteries of Comparative Examples 11 and 12, the percentage of the nitrile additive in the electrolyte is not within the range of this application. For the secondary batteries of Comparative Examples 13 and 14, the $D_v99$ of the negative electrode active material, the $D_v99$ of the positive electrode active material, and the coating weight $W_f$ of the negative electrode active material layer are not within the ranges of this application. For the secondary batteries of Comparative Examples 15 and 16, the $D_v99$ of the positive electrode active material, the $D_v99$ of the negative electrode active material, the percentage of the chain carboxylic acid ester in the electrolyte, the ratio $W_z/W_f$ of the coating weight $W_z$ of the positive electrode active material layer to the coating weight $W_f$ of the negative electrode active material layer, and the value of $W_f$ are all not within the ranges of this application. For the secondary batteries of Comparative Examples 17 and 18, the $D_v99$ of the positive electrode active material, the $D_v99$ of the negative electrode active material, the percentage of the chain carboxylic acid ester in the electrolyte, the ratio $W_z/W_f$ of the coating weight $W_z$ of the positive electrode active material layer to the coating weight $W_f$ of the negative electrode active material layer, the value of $W_f$, and the percentage of the nitrile additive in the electrolyte are all not within the ranges of this application. For Comparative Example 1, the coating weight $W_z$ of the positive electrode active material layer and the coating weight $W_f$ of the negative electrode active material layer are low, the secondary battery obtained has fast charging speed and low impedance. However, due to the excessively low coating weights of the positive electrode active material layer and the negative electrode active material layer, the costs of precisely controlling the coating weights in actual industrial production are too high, the yield of the lithium-ion batteries obtained in large-scale production is too low, and the energy density of the obtained secondary batteries is too low, which cannot meet the needs of actual production and is not suitable for industrial production applications. In the secondary batteries of Comparative Examples 2 to 18, the secondary battery cannot meet the requirements for short charging time, low charging temperature rise, long cycle life, and small swelling rate at the same time.

The coating weight $W_f$ of the negative electrode active material layer typically affects the cycling kinetic performance and high-temperature stability of the secondary battery. From Examples 1-1 to 1-7, Comparative Example 1, and Comparative Example 2, it can be seen that the secondary battery with the coating weight $W_f$ of the negative electrode active material layer within the range of this application can achieve short charging time (that is, high charging speed), low charging temperature rise, high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions. As mentioned above, the coating weight $W_z$ of the positive electrode active material layer and the coating weight $W_f$ of the negative electrode active material layer of Comparative Example 1 are low, the lithium-ion battery obtained has fast charging speed and low impedance. However, due to the excessively low coating weights of the positive electrode active material layer and the negative electrode active material layer, the costs of precisely controlling the coating weights in actual industrial production are too high, the yield of the lithium-ion batteries obtained in large-scale production is too low, and the energy density of the obtained lithium-ion batteries is too low, which cannot meet the needs of actual production and is not suitable for industrial production applications.

The ratio $W_z/W_f$ of the coating weight $W_z$ of the positive electrode active material layer to the coating weight $W_f$ of the negative electrode active material layer typically affects the cycling kinetic performance and high-temperature stability of the secondary battery. From Example 1-1, Example 1-8, Example 1-9, Comparative Example 3, and Comparative Example 4, it can be seen that the secondary battery with the ratio $W_z/W_f$ of the coating weight $W_z$ of the positive electrode

active material layer to the coating weight $W_f$ of the negative electrode active material layer within the range of this application can achieve short charging time, low charging temperature rise, high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions.

The $D_v99$ of the negative electrode active material typically affects the cycling kinetic performance and high-temperature stability of the secondary battery. From Example 1-1, Examples 1-10 to 1-13, Comparative Example 5, and Comparative Example 6, it can be seen that the secondary battery with the $D_v99$ of the negative electrode active material within the range of this application can achieve short charging time, low charging temperature rise, high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions.

The $D_v99$ of the positive electrode active material typically affects the cycling kinetic performance and high-temperature stability of the secondary battery. From Example 1-1, Examples 1-14 to 1-17, Comparative Example 7, and Comparative Example 8, it can be seen that the secondary battery with the $D_v99$ of the positive electrode active material within the range of this application can achieve short charging time, low charging temperature rise, high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions.

The percentage of the chain carboxylic acid ester in the electrolyte typically affects the cycling kinetic performance and high-temperature stability of the secondary battery. From Example 1-1, Examples 1-18 to 1-22, Comparative Example 9, and Comparative Example 10, it can be seen that the secondary battery with the percentage of the chain carboxylic acid ester in the electrolyte within the range of this application can achieve short charging time, low charging temperature rise, high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions.

The percentage of the nitrile additive in the electrolyte typically affects the cycling kinetic performance and high-temperature stability of the secondary battery. From Example 1-1, Examples 1-23 to 1-29, Comparative Example 11, and Comparative Example 12, it can be seen that the secondary battery with the percentage of the nitrile additive in the electrolyte within the range of this application can achieve short charging time, low charging temperature rise, high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions.

The $D_v50$ of the negative electrode active material typically affects the cycling kinetic performance and high-temperature stability of the secondary battery. From Example 1-1, Examples 1-10 to 1-13, Example 1-30, and Example 1-31, it can be seen that the secondary battery with the $D_v50$ of the negative electrode active material within the range of this application can achieve short charging time, low charging temperature rise, high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions. Moreover, from Example 1-11 and Example 1-30, it can also be seen that when the negative electrode active materials with the same $D_v99$ have different $D_v50$, the cycling kinetic performance and high-temperature stability of the secondary battery are also affected.

The $D_v50$ of the positive electrode active material typically affects the cycling kinetic performance and high-temperature stability of the secondary battery. From Example 1-1, Examples 1-14 to 1-17, Example 1-32, and Example 1-33, it can be seen that the secondary battery with the $D_v50$ of the positive electrode active material within the range of this application can achieve short charging time, low charging temperature rise, and high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions. Moreover, from Example 1-14 and Example 1-32, it can also be seen that when the positive electrode active materials with the same $D_v99$ have different $D_v50$, the cycling kinetic performance and high-temperature stability of the secondary battery are also affected.

**Table 2**

| | Mass percentage of organic solvent (%) | Type of chain carboxylic acid ester | Nitrile additive | Charging speed at 10C (min) | Charging temperature rise at 10C (°C) | Capacity retention rate after 1000 cycles at 25°C (%) | Swelling rate (%) |
|---|---|---|---|---|---|---|---|
| Example 1-1 | 80 | n-propyl propionate | Succinonitrile | 15.37 | 18.73 | 85.25 | 8.33 |
| Example 2-1 | 80 | n-butyl butyrate | Succinonitrile | 15.45 | 18.77 | 84.33 | 8.49 |
| Example 2-2 | 80 | Methyl formate | Succinonitrile | 15.42 | 18.86 | 83.22 | 8.43 |
| Example 2-3 | 80 | Ethyl butyrate | Succinonitrile | 15.43 | 18.73 | 83.63 | 8.25 |
| Example 2-4 | 80 | n-propyl propionate | Glutaronitrile | 15.45 | 18.74 | 83.66 | 8.56 |
| Example 2-5 | 80 | n-propyl propionate | 1,3,6-hexanetricarbonitrile | 15.52 | 18.86 | 82.33 | 8.42 |
| Example 2-6 | 60 | n-propyl propionate | Succinonitrile | 15.82 | 19.24 | 80.13 | 7.67 |
| Example 2-7 | 70 | n-propyl propionate | Succinonitrile | 15.53 | 18.96 | 82.13 | 7.92 |
| Example 2-8 | 55 | n-propyl propionate | Succinonitrile | 15.96 | 19.37 | 78.46 | 7.54 |
| Example 2-9 | 85 | n-propyl propionate | Succinonitrile | 15.23 | 18.68 | 77.33 | 9.87 |

The type of chain carboxylic acid ester typically affects the cycling kinetic performance and high-temperature stability of the secondary battery. From Example 1-1 and Examples 2-1 to 2-3, it can be seen that the secondary battery with the type of chain carboxylic acid ester within the range of this application can achieve short charging time, low charging temperature rise, high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions.

The type of nitrile additive typically affects the cycling kinetic performance and high-temperature stability of the secondary battery. From Example 1-1, Example 2-4, and Example 2-5, it can be seen that the secondary battery with the type of nitrile additive within the range of this application can achieve short charging time, low charging temperature rise, high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions.

The percentage of the organic solvent in the electrolyte typically affects the cycling kinetic performance and high-temperature stability of the secondary battery. From Example 1-1 and Examples 2-6 to 2-9, it can be seen that the secondary battery with the percentage of the organic solvent in the electrolyte within the range of this application can achieve short charging time, low charging temperature rise, high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions.

Table 3

| | Negative electrode active material | $I_d/I_g$ | Positive electrode active material | Charging speed at 10C (min) | Charging temperature rise at 10C (°C) | Capacity retention rate after 1000 cycles at 25°C (%) | Swelling rate (%) |
|---|---|---|---|---|---|---|---|
| Example 1-1 | Artificial graphite + amorphous carbon (Mr=92:8) | 0.8 | Lithium cobaltate | 15.37 | 18.73 | 85.25 | 8.33 |
| Example 3-1 | Silicon-carbon material (mass ratio of silicon to carbon: 5:95) | 0 | Lithium cobaltate | 16.82 | 19.72 | 80.15 | 9.42 |
| Example 3-2 | Artificial graphite + amorphous carbon (Mr=98:2) | 0.2 | Lithium cobaltate | 15.83 | 19.31 | 81.26 | 8.27 |
| Example 3-3 | Artificial graphite + amorphous carbon (Mr=95:5) | 0.5 | Lithium cobaltate | 15.53 | 19.04 | 83.24 | 8.22 |
| Example 3-4 | Artificial graphite + amorphous carbon (Mr=90:10) | 1.0 | Lithium cobaltate | 15.27 | 18.53 | 82.18 | 8.52 |
| Example 3-5 | Artificial graphite + amorphous carbon (Mr=92:8) | 0.8 | Lithium iron phosphate | 15.57 | 18.83 | 83.14 | 8.53 |
| Example 3-6 | Artificial graphite + amorphous carbon (Mr=92:8) | 0.8 | Lithium nickel cobalt manganese oxide (NCM811) | 15.42 | 18.96 | 82.33 | 8.77 |
| Note: "\" in Table 3 indicates no corresponding parameter. "Mr" in Table 3 indicates a mass ratio of artificial graphite to amorphous carbon. | | | | | | | |

The type of the negative electrode active material and the $I_d/I_g$ value of the carbon-based material typically affect the cycling kinetic performance and high-temperature stability of the secondary battery. From Example 1-1 and Examples 3-1 to 3-4, it can be seen that the secondary battery with the type of the negative electrode active material and the $I_d/I_g$ value of the carbon-based material within the ranges of this application can achieve short charging time, low charging temperature rise, high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions. FIG. 1 is a Raman spectrum of Example 3-3. From FIG. 1, it can be seen that in the Raman spectrum of the high-kinetics negative electrode material, the $I_d/I_g$ value is relatively high, indicating a good surface activity.

The type of the positive electrode active material typically affects the cycling kinetic performance and high-temperature stability of the secondary battery. From Example 1-1, Example 3-5, and Example 3-6, it can be seen that the secondary battery with the type of the positive electrode active material and the $I_d/I_g$ value of the carbon-based material within the ranges of this application can achieve short charging time, low charging temperature rise, high capacity retention rate at a charging rate of 10C, and low swelling rate in thickness after storage at 90°C for 8 h. Thus, the secondary battery can achieve high-temperature stability while maintaining good cycling kinetic performance under ultra-fast charging conditions.

It should be noted that in this specification, relational terms such as first and second are used solely to distinguish one entity or operation from another entity or operation, but do not necessarily require or imply any actual relationship or order between such entities or operations. Moreover, the terms "include", "comprise", or any other variants are intended to cover a non-exclusive inclusion, such that a process, method, article, or device that includes a list of elements not only includes those elements but also includes other elements that are not expressly listed, or further includes elements

inherent to such process, method, article, or device.

The embodiments in this specification are described in an interrelated manner. For a part that is the same or similar between different embodiments, reference may be made between the embodiments. Each embodiment focuses on the differences from other embodiments.

The foregoing descriptions are merely preferred embodiments of this application, but are not intended to limit this application. Any modification, equivalent replacement, or improvement made without departing from the spirit and principle of this application shall fall within the protection scope of this application.

## Claims

**1.** A secondary battery comprising an electrode assembly and an electrolyte, wherein the electrode assembly comprises a positive electrode plate, a negative electrode plate, and a separator, wherein the positive electrode plate comprises a positive electrode active material layer, the positive electrode active material layer comprising a positive electrode active material; and the negative electrode plate comprises a negative electrode active material layer, the negative electrode active material layer comprising a negative electrode active material;

a coating weight of the positive electrode active material layer is $W_z$, a coating weight of the negative electrode active material layer is $W_f$, and $W_z$ and $W_f$ satisfy: $1.6W_f \leq W_z \leq 2.2W_f$, and $3.25\ mg/cm^2 \leq W_f \leq 5.84\ mg/cm^2$; and $D_v99$ of the positive electrode active material is 27 μm to 33 μm, and $D_v99$ of the negative electrode active material is 23 μm to 28 μm; and

the electrolyte comprises an organic solvent, a lithium salt, and a nitrile additive, wherein the organic solvent comprises a chain carboxylic acid ester, and based on a mass of the electrolyte, a mass percentage of the chain carboxylic acid ester is 6% to 56%, and a mass percentage of the nitrile additive is 0.01% to 10%.

**2.** The secondary battery according to claim 1, wherein $6.49\ mg/cm^2 \leq W_z \leq 11.69\ mg/cm^2$.

**3.** The secondary battery according to claim 1, wherein $3.90\ mg/cm^2 \leq W_f \leq 5.19\ mg/cm^2$, and/or $7.80\ mg/cm^2 \leq W_z \leq 10.38\ mg/cm^2$.

**4.** The secondary battery according to claim 1, wherein the $D_v99$ of the positive electrode active material is 28 μm to 31 μm, and/or the $D_v99$ of the negative electrode active material is 24 μm to 26 μm.

**5.** The secondary battery according to claim 1, wherein $D_v50$ of the positive electrode active material is 10 μm to 15 μm, and $D_v50$ of the negative electrode active material is 7 μm to 12 μm.

**6.** The secondary battery according to claim 1, wherein the negative electrode active material comprises at least one of a carbon-based material, a silicon-based material, or a tin-based material, wherein the carbon-based material comprises at least one of natural graphite, artificial graphite, soft carbon, hard carbon, or mesocarbon microbeads; the silicon-based material comprises at least one of elemental silicon, a silicon-carbon material, or a silicon-oxygen material; and the tin-based material comprises at least one of elemental tin, a tin alloy, or a tin oxide.

**7.** The secondary battery according to claim 6, wherein for the carbon-based material, a peak intensity ratio $I_d/I_g$ of a D peak to a G peak obtained from Raman spectroscopy satisfies: $0.1 \leq I_d/I_g \leq 1.0$.

**8.** The secondary battery according to claim 1, wherein the positive electrode active material comprises at least one of lithium nickel cobalt manganese oxide, lithium nickel cobalt aluminum oxide, lithium iron phosphate, lithium-rich manganese-based material, lithium cobaltate, lithium manganate, lithium manganese iron phosphate, or lithium titanate.

**9.** The secondary battery according to claim 8, wherein the positive electrode active material further comprises a non-metal element, wherein the non-metal element comprises at least one of fluorine, phosphorus, boron, chlorine, silicon, or sulfur.

**10.** The secondary battery according to claim 1, wherein the chain carboxylic acid ester comprises at least one of methyl formate, methyl acetate, ethyl formate, ethyl acetate, propyl acetate, ethyl propionate, methyl propionate, n-propyl propionate, isopropyl propionate, methyl propionate, n-butyl propionate, isobutyl propionate, n-pentyl propionate, isopentyl propionate, ethyl butyrate, n-propyl butyrate, propyl isobutyrate, n-pentyl butyrate, n-pentyl isobutyrate, n-

butyl butyrate, isobutyl isobutyrate, or n-pentyl valerate.

**11.** The secondary battery according to claim 1, wherein based on the mass of the electrolyte, a mass percentage of the chain carboxylic acid ester is 18% to 40%.

**12.** The secondary battery according to claim 1, wherein the nitrile additive comprises at least one of malononitrile, succinonitrile, glutaronitrile, adiponitrile, pimelonitrile, suberonitrile, sebaconitrile, 3,3'-oxydipropionitrile, hex-2-enedinitrile, trans-but-2-enedinitrile, 2-pentenedinitrile, methylglutaronitrile, 4-cyanoheptanedinitrile, (Z)-but-2-enedinitrile, 2,2,3,3-tetrafluorosuccinonitrile, ethylene glycol bis(propionitrile) ether, 1,3,5-pentanetricarbonitrile, 1,3,6-hexanetricarbonitrile, 1,2,6-hexanetricarbonitrile, 1,2,3-tris(2-cyanoethoxy)propane, 1,1,3,3-propanetetracarbonitrile, 2,2'-(1,4-phenylene)bispropanedinitrile, 1,1,5,5-pentanetetracarbonitrile, 1,1,4,4-butanetetracarbonitrile, or 1,1,6,6-hexanetetracarbonitrile.

**13.** The secondary battery according to claim 1, wherein based on the mass of the electrolyte, a mass percentage of the nitrile additive is 5% to 8%.

**14.** The secondary battery according to claim 1, wherein the organic solvent further comprises at least one of ethylene carbonate, propylene carbonate, dimethyl carbonate, diethyl carbonate, methyl ethyl carbonate, γ-butyrolactone, or tetrahydrofuran; and
based on the mass of the electrolyte, a mass percentage of the organic solvent is 60% to 80%.

**15.** An electric device, comprising the secondary battery according to any one of claims 1 to 14.

1200
1000
800
600
400
200
0
Raman Intensity (W/m2)
900
1100
1300
1500
1700
1900
Raman Shift (cm-1)


FIG. 1

**INTERNATIONAL SEARCH REPORT**

International application No.
**PCT/CN2023/130417**

**A. CLASSIFICATION OF SUBJECT MATTER**

H01M4/13(2010.01)i; H01M4/133(2010.01)i; H01M4/134(2010.01)i

According to International Patent Classification (IPC) or to both national classification and IPC

**B. FIELDS SEARCHED**

Minimum documentation searched (classification system followed by classification symbols)

IPC: H01M4/-

Documentation searched other than minimum documentation to the extent that such documents are included in the fields searched

Electronic data base consulted during the international search (name of data base and, where practicable, search terms used)

CNTXT, DWPI, ENTXTC, CNKI: 电池, 二次, 活性材料, 涂, 重量, 锂, Li, 腈, 羧酸酯, secondary battery, positive, material, coat+, weight, lithium, nitrile, carboxylic ester

**C. DOCUMENTS CONSIDERED TO BE RELEVANT**

| Category* | Citation of document, with indication, where appropriate, of the relevant passages | Relevant to claim No. |
|---|---|---|
| A | CN 117013050 A (XIAMEN AMPACE TECHNOLOGY CO., LTD.) 07 November 2023 (2023-11-07) description, paragraph 0006 | 1-15 |
| A | CN 115347241 A (NINGDE AMPEREX TECHNOLOGY LTD.) 15 November 2022 (2022-11-15) entire document | 1-15 |
| A | CN 116404275 A (NINGDE AMPEREX TECHNOLOGY LTD.) 07 July 2023 (2023-07-07) entire document | 1-15 |
| A | CN 116802844 A (NINGDE AMPEREX TECHNOLOGY LTD.) 22 September 2023 (2023-09-22) entire document | 1-15 |
| A | CN 116848692 A (CONTEMPORARY AMPEREX TECHNOLOGY CO., LTD.) 03 October 2023 (2023-10-03) entire document | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **01 July 2024** | **05 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2023/130417**

**C. DOCUMENTS CONSIDERED TO BE RELEVANT**

| Category* | Citation of document, with indication, where appropriate, of the relevant passages | Relevant to claim No. |
|---|---|---|
| A | CN 113644275 A (SHENZHEN CAPCHEM TECHNOLOGY CO., LTD.) 12 November 2021 (2021-11-12) entire document | 1-15 |
| A | CN 114024028 A (SHENZHEN CAPCHEM TECHNOLOGY CO., LTD.) 08 February 2022 (2022-02-08) entire document | 1-15 |
| A | CN 115275103 A (BYD CO., LTD.) 01 November 2022 (2022-11-01) entire document | 1-15 |
| A | US 2021288322 A1 (MURATA MANUFACTURING CO., LTD.) 16 September 2021 (2021-09-16) entire document | 1-15 |
| A | WO 2023050359 A1 (NINGDE AMPEREX TECHNOLOGY LTD.) 06 April 2023 (2023-04-06) entire document | 1-15 |

Form PCT/ISA/210 (second sheet) (July 2022)

**INTERNATIONAL SEARCH REPORT**
**Information on patent family members**

International application No.
**PCT/CN2023/130417**

| Patent document cited in search report | Publication date (day/month/year) | Patent family member(s) | Publication date (day/month/year) |
|---|---|---|---|
| CN 117013050 A | 07 November 2023 | None | |
| CN 115347241 A | 15 November 2022 | None | |
| CN 116404275 A | 07 July 2023 | None | |
| CN 116802844 A | 22 September 2023 | None | |
| CN 116848692 A | 03 October 2023 | None | |
| CN 113644275 A | 12 November 2021 | None | |
| CN 114024028 A | 08 February 2022 | None | |
| CN 115275103 A | 01 November 2022 | None | |
| US 2021288322 A1 | 16 September 2021 | JP 2022163149 A | 25 October 2022 |
| | | JPWO 2020111222 A1 | 02 September 2021 |
| | | JP 7124885 B2 | 24 August 2022 |
| | | WO 2020111222 A1 | 04 June 2020 |
| | | EP 3855531 A1 | 28 July 2021 |
| | | EP 3855531 A4 | 06 July 2022 |
| WO 2023050359 A1 | 06 April 2023 | None | |

Form PCT/ISA/210 (patent family annex) (July 2022)